# EUROPEAN PATENT APPLICATION

(11) **EP 0 823 816 A2**
(43) Date of publication of application: **11.02.1998**
(21) Application number: 97113400.2
(22) Date of filing: 04.08.1997
(51) Int. Cl.: H04N 5/77

(54) **Camera system using disk as recording medium**

(30) Priority: 05.08.1996 JP 206004/96
(71) Applicant: HITACHI, LTD., Chiyoda-ku, Tokyo 101 (JP)
(72) Inventor: Chiba, Hiroshi, Yokohama-shi, Kanagawa-ken (JP); Shiokawa, Junji, Chigasaki-shi, Kanagawa-ken (JP); Yatsugi, Tomishige, Hitachinaka-shi, Ibaraki-ken (JP)
(74) Representative: Altenburg, Udo, Dipl.-Phys.

(57) **Abstract**

A system avoids faulty data reading attributable to damage caused to a recording medium by improving a recording procedure by which an HDD included in an electronic camera system records data in the recording medium which often undergoes shocks while the same is being carried. A camera system (1) has a lens (2), a diaphragm (2a), and a CCD (3) for converting light received through the lens (2) into corresponding electric signals. An operating switch unit (32) connected to a system controller (30) is operated to operate the camera system (1). An image compressing-and-expanding circuit (50) processes the output signals of a camera signal processing circuit (10) for image signal compression and the like. Image data is stored temporarily in an SDRAM (52) connected to the image compressing-and-expanding circuit (50). An image compression and expansion control circuit (70), a RAM (72) and a ROM (74) are connected through a bus (60) to the image compressing-and-expanding circuit (50) for image data compression and expansion. Compressed image data is sent through a PCMCIA driver (62) to and stored in a recording medium loaded into a HDD (80). The recording medium is a hard disk or a PC card. An original FAT and an original directory are recorded in a backup area formed in the disk loaded into the HDD.

## Description

### BACKGROUND OF THE INVENTION

### Field of the Invention

The present invention relates to a camera system using a disk as a recording medium to record moving pictures and capable of improving the shock resistance of the disk.

A camera system integrally provided with a VTR and using a magnetic tape as a recording medium has widely been used as a portable camera system for recording moving pictures. A camera system of this type converts image signals into video signals and records the video signals, and moving pictures represented by the video signals are reproduced by a television receiver. When processing moving pictures on a personal computer, images of moving pictures taken by the camera system need to be recorded on a disk in a format compatible with the personal computer.

When a portable camera system provided with a disk as a recording medium is used for recording moving pictures, the camera system needs to write data to the disk while the same is being moved and operated. Generally, the disk as a recording medium, and a hard disk drive (HDD) into which the disk is loaded are used in a stationary state or in a moving vehicle or a moving airplane and are subjected to neither a high acceleration nor a high deceleration.

A camera system for taking moving pictures is moved violently to follow a moving object and, consequently, the HDD and the disk are subjected to a high acceleration and a high deceleration. In a camera system which write data to a disk while the same is subjected to a high acceleration or a high deceleration, the data area of the disk is liable to be damaged.

The present invention has been made in view of those problems and it is therefore an object of the present invention to enhance the shock resistance of a camera system using a disk as a recording medium.

### SUMMARY OF THE INVENTION

The present invention achieves the foregoing object by recording at least a FAT (file allocation table) and a directory in both an original recording area and a backup area separate from an original recording area on a disk in a format compatible with data handled by a personal computer, and backing up the contents of the backup area periodically.

A camera system of the present invention comprises an imaging device capable of converting an optical image formed thereon into electric signals by photoelectric conversion, a driving circuit for driving the imaging device, a signal processing circuit which subjects output signals of the imaging device to a predetermined process to produce predetermined moving picture data, an image compressing-and-expanding circuit capable of producing compressed image data by compressing the moving picture data and of expanding the compressed image data, a disk capable of storing the compressed image data in a format compatible with a personal computer, a disk driving means, and a system control means. The disk has a backup area, and the system control means stores a file allocation table (FAT) and a directory connected with the image data in the backup area of the disk.

Thus, the camera system of the present invention uses, as a recording medium, a disk having a large recording capacity and liable to be damaged when shocked during a recording operation, creates a backup area in the disk, and records backup copies of an original FAT and an original directory in the backup area. Therefore, recorded pictures can be reproduced by using data stored in the backup area even if the original FAT and the original directory are damaged. Backup data updating timing may be determined by various processing systems, considering the efficiency of operations and such. The present invention is applicable to other information recording apparatuses which are used under conditions requiring shock resistance.

### BRIEF DESCRIPTION OF THE DRAWINGS

The present invention will become more apparent from the following description, when taken in conjunction with the accompanying drawings, in which:
Fig. 1 is a block diagram of a camera system in a preferred embodiment according to the present invention;
Fig. 2 is a flow chart of a data writing procedure for writing data to a disk not having any backup area;
Fig. 3 is a flow chart of a procedure in accordance with the present invention;
Fig. 4 is a flow char of another procedure in accordance with the present invention;
Fig. 5 is a flow chart of a third procedure in accordance with the present invention;
Fig. 6 is a flow chart of a fourth procedure in accordance with the present invention;
Fig. 7 is a flow chart of a fifth procedure in accordance with the present invention; and
Fig. 8 is a flow chart of a sixth procedure in accordance with the present invention.

### DETAILED DESCRIPTION OF THE PREFERRED EMBODIMENTS

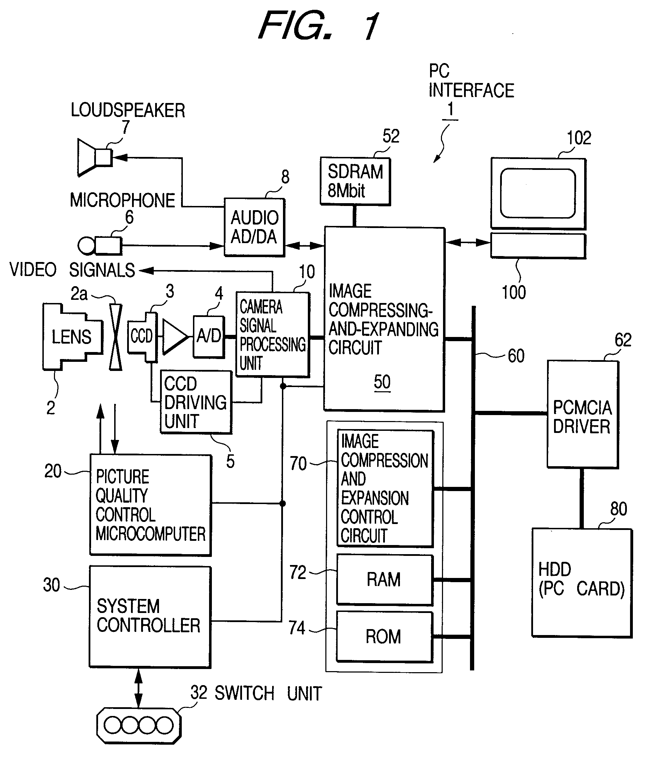

Referring to Fig. 1, a camera system in a preferred embodiment according to the present invention generally indicated at 1 uses a disk as a recording medium, and has a lens 2, a diaphragm 2a, and a CCD 3 for converting light received through the lens 2 into corresponding electric signals. The CCD 3 is driven by a CCD driving unit 5. An A/D converter 4 converts the analog output signals of the CCD into corresponding digital signals and gives the digital signals to a camera signal processing circuit 10. A picture quality control microcomputer 20 and a system controller 30 are connected to the cameral signal processing circuit 10. An operating switch unit 32 is connected to the system controller 30. The user operates the operating switch unit 32 to operate the camera system 1. The picture quality control microcomputer 20 monitors the output of the camera signal processing circuit 10 and controls the lens 2 and the associated components to obtain pictures of a good picture quality. A microphone 6 and a loudspeaker 7 are connected through an audio A/D converter 8 to an image compressing-and-expanding circuit 50. The image compressing-and-expanding circuit 50 processes the output signals of the camera signal processing circuit 10 for image signal compression and the like. Image data is stored temporarily in an SDRAM 52 connected to the image compressing-and-expanding circuit 50.

An image compression and expansion control circuit 70, RAM 72 and a ROM 74 are connected through a bus 60 to the image compressing-and-expanding circuit 50 for image data compression and expansion. Compressed image data is sent through a PCMCIA driver 62 to and stored in a disk, i.e., a recording medium, loaded into a hard disk drive (abbreviated to "HDD") 80. The disk may be substituted by a PC card. The disk records the image data in a format compatible with that of data processed by a personal computer.

The image compressing-and-expanding circuit 50 of the camera system 1 can be connected through a PC interface to the personal computer to display pictures taken by the camera system 1 on a display 102 included in the personal computer 100.

The present invention is intended to provide a system capable of avoiding faulty data reading due to damage in a recording medium by recording image data by an improved recording procedure by which a HDD included in a portable electronic camera liable to undergo shocks during use records image data.

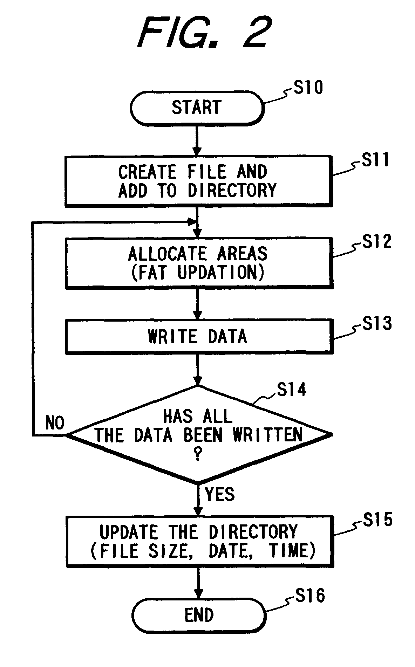

Fig. 2 shows a general data recording procedure 1 which does not create any backup copy. Referring to Fig. 2, the data recording procedure 1 is started in step S10. A file is created and added to a directory in step S11. A recording area is determined on a disk and a file allocation table (abbreviated to "FAT") is updated in step S12, and a data write operation is carried out in step S13. If it is decided in step S14 that a writing operation for writing all the data is completed, file size, date and time recorded in the directory are updated in step S15 and the data writing procedure 1 is ended in step S16.

Data writing procedures, which record a backup FAT and a backup directory in a backup area defined in a disk during the picture taking operation of the camera system 1, will be described hereinafter.

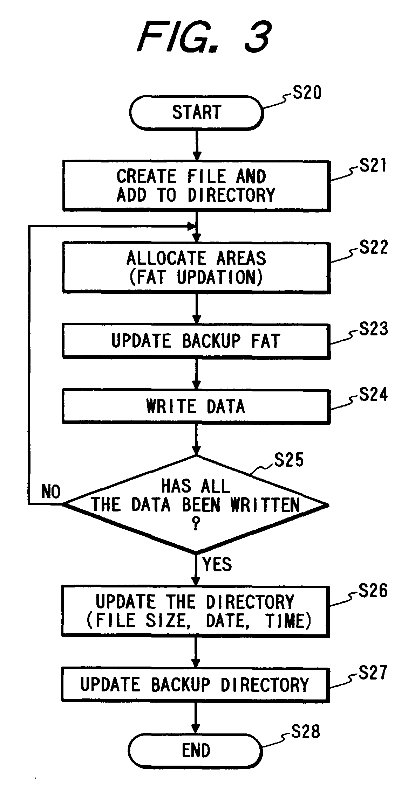

A data writing procedure 2 shown in Fig. 3 includes, in addition to steps included in the data writing procedure 1 shown in Fig. 2, a step of simultaneously carrying out an operation for updating backup copies and an operation for updating a FAT and a directory. The data writing procedure 2 for writing data to a file is started in step S20, a file is created and added to a directory in step S21. An area is specified in the disk and an original FAT is updated in step S22. A FAT recorded in a backup area is updated in step S23 and data is written to a file area in step S24. If it is decided in step S25 that all the data has been written, an original directory of file size, date and time is updated in step S26, the contents of the directory recorded in the backup area is updated in step S27, and the data writing procedure 2 is ended in step S28.

The data writing procedure 2 is capable of most surely creating a backup. However, the data writing procedure 2 requires frequent operations for gaining access to the disk (seek operation) because the original FAT and the backup FAT are updated continuously. Therefore, the data writing procedure 2 is disadvantageous in respect of processing time and power consumption.

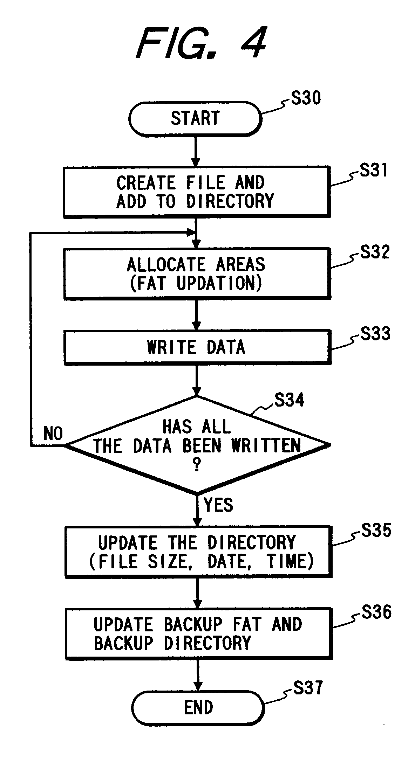

A data writing procedure 3 shown in Fig. 4 updates backup data at the end of a data writing operation. Steps S30 to S35 for writing data and updating an original directory of the data writing procedure 3 are the same as the corresponding steps of the data writing procedure 1. In step S36, a FAT and a directory stored in a backup area are updated together, and the data writing procedure 3 is ended in step S36.

The data writing procedure 3 does not updates the backup if a trouble, such as the accidental disconnection of a power supply or the inadvertent ejection of the disk resulting from an erroneous operation, occurs during a data recording operation. However, processing time necessary for a backup updating operation and a seek operation is curtailed.

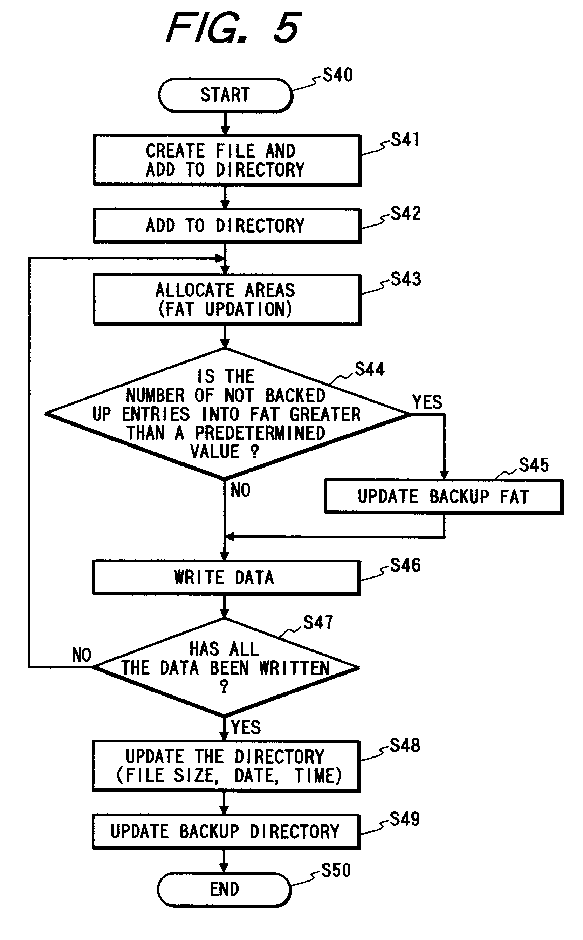

A data writing procedure 4 shown in Fig. 5 monitors the number of entries entered into a FAT and any backup copy of which is not created, and creates a backup after a predetermined number of entries are entered into the FAT.

In step S44, the number of not backed up entries entered into a FAT is compared with a predetermined value. If the number of not backed up entries entered into the FAT is less than the predetermined value, a backup copy is not updated and a data write operation is repeated. If the number of not backed up entries entered into the FAT exceeds the predetermined value, a backup FAT is updated in step S45. Upon the completion of the data write operation, an original directory is updated in step S48, a backup directory is updated in step S49 and the data writing procedure 4 is ended in step S50.

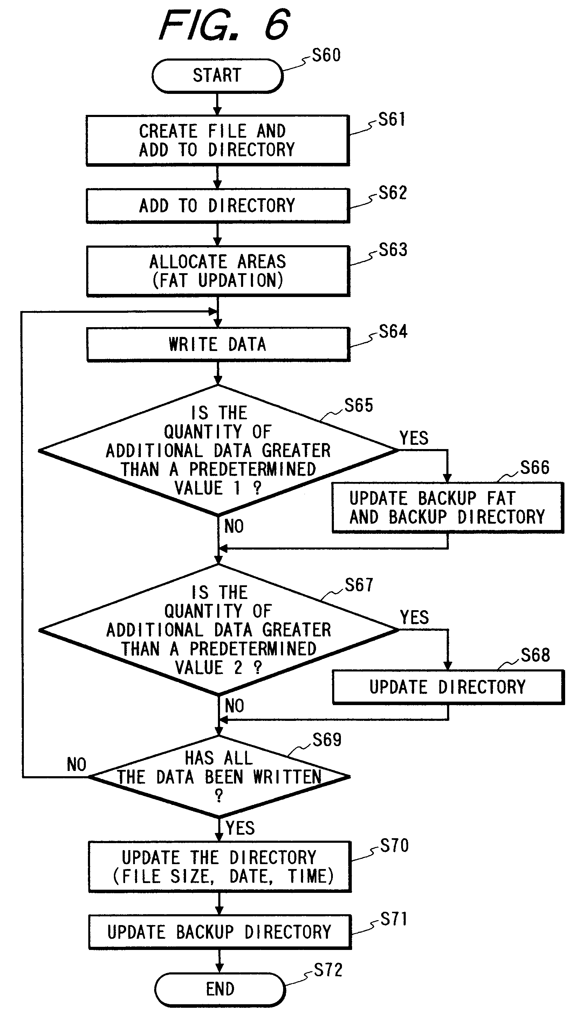

A data writing procedure 5 shown in Fig. 6 carries out operations for updating a backup FAT and a backup directory during a recording operation. The quantity of additionally recorded data is monitored, and a backup copy is updated every time a predetermined quantity of data is recorded.

Data is written in step S64, and the quantity of additional data is compared with a predetermined value 1 in step S65. Suppose that the predetermined value 1 is 300 Kbytes from the start of recording. Then, the backup FAT and the backup directory are updated in step S66 upon the recording of 300 Kbytes of data. The quantity of the additional data is compared with a predetermined value 2 in step S67, and an original directory is updated in step S68 every time the quantity of additional data added in step S67 increases to the predetermined value 2. The predetermined value 2 is, for example, 150 Kbytes after the start of the recording operation. If an MPEG1 is used for recording, a standard recording rate is 150 Kbyte/sec.

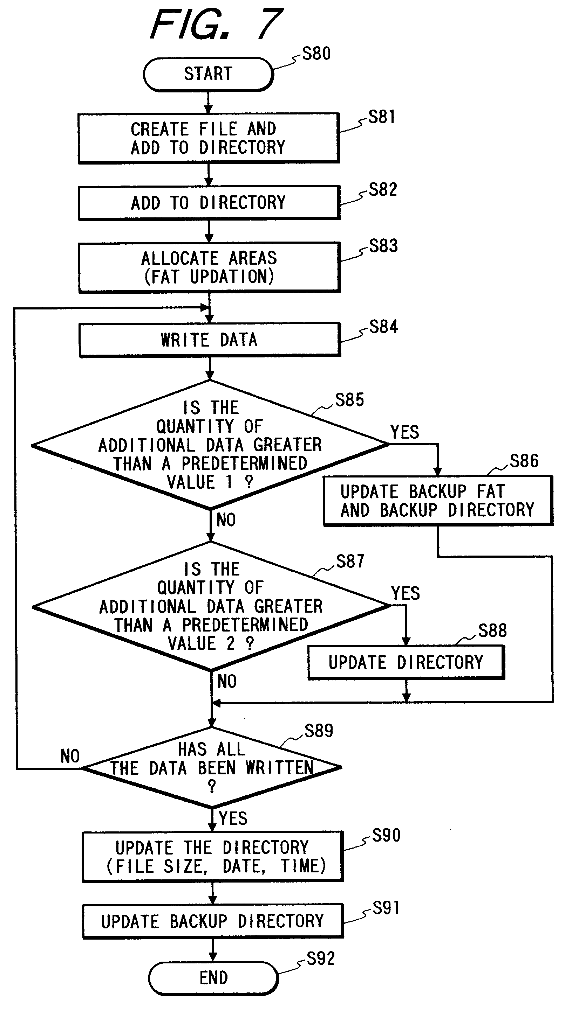

A data writing procedure 6 shown in Fig. 7 is a modification of the data writing procedure 5. The flow 6 does not carry out an operation for updating an original directory and an operation for updating a backup FAT and a backup directory simultaneously. If it is decided in step S85 that the quantity of additional data added by a data write operation has increased to a predetermined value 1, a backup FAT and a backup directory are updated in step S86 and the flow goes directly to step S89. If it is decided in step S87 that the quantity of additional data added by a data write operation has increased to a predetermined value 2, an original directory is updated in step S88. If it is decided in step S89 that an operation for writing all the data has been completed, the original directory storing file size, date and time is updated in step S90, and then the flow is ended in step S92. The data writing procedure 6 coincides with the flow 5 if the predetermined values 1 and 2 are determined selectively.

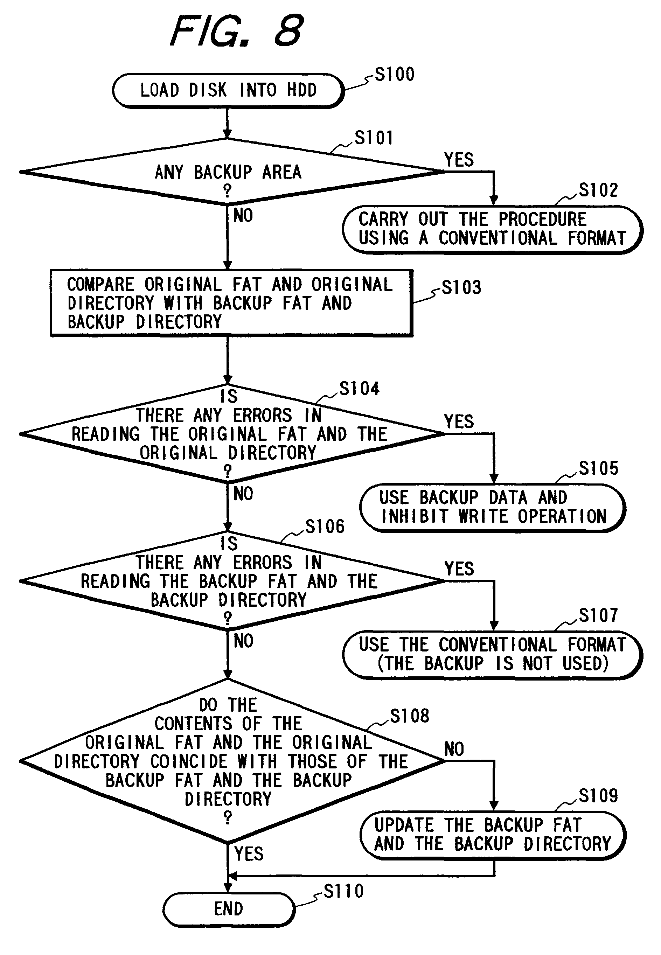

Fig. 8 shows a format identifying procedure for identifying the format of a disk when the disk is loaded into the HDD. When a disk is loaded into the HDD in step S100, the disk is examined in step S101 to see if any backup area is formed in the disk. If the disk does not have any backup area, the flow goes to step S102 where the procedure of flow 1 using a conventional format is carried out. If a backup area is formed in the disk, an original FAT and an original directory are compared with a backup FAT and a backup directory in step S103. If errors occur in reading the original FAT and the original directory (response in step 104 is affirmative), backup data is used and an operation for creating backup copies is inhibited in step S105. If data can be read from the original FAT and the original directory and errors occur in reading the backup data (step S106), the conventional format not using any backup is used in step S107. If it is decided in step S108 that the contents of the original FAT and the original directory coincide with those of the backup FAT and the backup directory, the original contents including the backup copies are updated in step S109. If the original contents and the contents of the backup do not coincide with each other, the contents of the backup is used preferentially in step S110.

The present invention is applicable to other information recording apparatuses which are used under conditions requiring shock resistance.

## Claims

1. A video camera comprising:
an imaging device capable of converting an optical image formed thereon into electric signals by photoelectric conversion;
a driving circuit for driving the imaging device;
a signal processing circuit which subjects output signals of the imaging device to a predetermined process to produce predetermined moving picture data;
an image compressing-and-expanding circuit capable of producing compressed image data by compressing the moving picture data and of expanding the compressed image data;
a disk recording unit capable of storing the compressed image data in a format compatible with a personal computer on a disk type recording medium having an information recording area and a backup area;
a disk recording unit driving means for driving the disk recording unit; and
a system controller for controlling the disk recording unit driving means so as to record the compressed image data, a file allocation table (FAT) connected with the compressed image data and directory information in both the information recording area and the backup area of the disk type recording medium.

2. The video camera according to claim 1, wherein the system control means controls the disk recording unit driving means so that the backup FAT stored in the backup area is updated every time an original FAT specifying an area to which image data is written is updated.

3. The video camera according to claim 1, wherein the system control means controls the disk recording unit driving means so that the backup FAT and the backup directory stored in the backup area are updated at the termination of an image data write operation.

4. The video camera according to claim 1, wherein the system control means controls the disk recording unit driving means so that the FAT stored in the backup area is updated upon the increase of the number of entries into the original FAT, which increases every time image data is written, to a predetermined number.

5. The video camera according to claim 1, wherein the system control means controls the disk recording unit driving means so that the backup FAT and the backup directory stored in the backup area are updated upon the increase of the quantity of written image data to a predetermined value.

6. The video camera according to claim 1, wherein the system control means controls the disk recording unit driving means so that the backup FAT and the backup directory stored in the backup area are updated upon the increase of the quantity of written image data to a first predetermined value, and the original directory information is updated upon the increase of the quantity of image data to a second predetermined value different from the first predetermined value.

7. The video camera according to claim 1, further comprising a detecting means for examining a disk type recording medium loaded into a hard disk drive to see if there is any backup area in the disk type recording medium loaded into the hard disk drive.

8. The video camera according to claim 1, wherein the system control means compares the contents of the original FAT and the original directory with those of the backup FAT and the backup directory stored in the backup area, and uses the backup FAT and the backup directory stored in the backup area preferentially when those contents do not coincide with each other.

9. An information recording apparatus comprising:
a disk recording unit for recording information data on a disk type recording medium having an information recording area and a backup area;
a disk recording unit driving means for driving the disk recording unit; and
a system control means for controlling the disk recording unit driving means so as to record the information data and a file allocation table (FAT) connected with the information data, and directory information in both the information recording area and the backup area of the disk type recording medium.

10. The information recording apparatus according to claim 9, wherein the system control means controls the disk recording unit driving means so that the backup FAT stored in the backup area is updated every time an original FAT specifying an area to which image data is written is updated.

11. The information recording apparatus according to claim 9, wherein the system control means controls the disk recording unit driving means so that the backup FAT and the backup directory stored in the backup area are updated at the termination of an image data write operation.

12. The information recording apparatus according to claim 9, wherein the system control means controls the disk recording unit driving means so that the backup FAT stored in the backup area is updated upon the increase of the number of entries into the original FAT, which increases every time image data is written, to a predetermined number.

13. The information recording apparatus according to claim 9, wherein the system control means controls the disk recording unit driving means so that the backup FAT and the backup directory stored in the backup area are updated upon the increase of the quantity of written image data to a predetermined value.

14. The information recording apparatus according to claim 9, wherein the system control means controls the disk recording unit driving means so that the backup FAT and the backup directory stored in the backup area are updated upon the increase of the quantity of written image data to a first predetermined value, and the original directory information is updated upon the increase of the quantity of image data to a second predetermined value different from the first predetermined value.

15. The information recording apparatus according to claim 9, further comprising a detecting means for examining a disk type recording medium loaded into a hard disk drive to see if there is any backup area in the disk type recording medium loaded into the hard disk drive.

16. The video camera according to claim 9, wherein the system control means compares the contents of the original FAT and the original directory with those of the backup FAT and the backup directory stored in the backup area, and uses the backup FAT and the backup directory stored in the backup area preferentially when those contents do not coincide with each other.
